# FASCICULE DE BREVET EUROPEEN

(11) **EP 1 741 013 B1**
(45) Date de publication et mention de la délivrance du brevet: **26.03.2008**
(21) Numéro de dépôt: 05718524.1
(22) Date de dépôt: 21.04.2005
(51) Int. Cl.: G05B 19/414, G05B 19/042, E05F 15/00

(54) **PROCEDE D'ESTIMATION D'UNE DUREE PENDANT LAQUELLE UN ACTIONNEUR DE VOLET ROULANT EST HORS TENSION**
VERFAHREN ZUR SCHÄTZUNG EINER DAUER, WÄHREND DER EIN ROLLADENSTELLGLIED AUSGESCHALTET IST
METHOD FOR ESTIMATING A DURATION DURING WHICH A ROLLING SHUTTER ACTUATOR IS POWERED OFF

(30) Priorité: 27.04.2004 FR 0404450
(43) Date de publication de la demande: 10.01.2007
(73) Titulaire: Somfy SAS, 74300 Cluses (FR)
(72) Inventeur: GREHANT, Bernard, F-74300 Nancy-Sur-Cluses (FR)
(74) Mandataire: Bugnion Genève
(86) Numéro de dépôt international: PCT/IB2005/001129
(87) Numéro de publication internationale: WO 2005/104330

(56) Documents cités:
- EP-A- 0 724 208
- DE-A1- 19 616 066
- FR-A- 2 844 625
- US-A- 6 078 159

## Description

L'invention concerne un procédé d'estimation d'une durée pendant laquelle un actionneur destiné à manoeuvrer un écran mobile ou un équipement mobile de fermeture, d'occultation ou de protection solaire d'un bâtiment n'est pas alimenté selon le préambule de la revendication 1. L'invention concerne également un actionneur destiné à mettre en oeuvre le procédé selon l'invention.

Les actionneurs utilisés pour la manoeuvre d'éléments de fermeture, d'occultation ou de protection solaire du bâtiment sont souvent alimentés par le réseau alternatif de distribution d'énergie électrique. Dans certaines configurations, il s'avère très intéressant de mesurer le temps pendant lequel l'actionneur n'est pas alimenté. En effet, une ou plusieurs périodes brèves de non-alimentation de l'actionneur peuvent être utilisées pour envoyer à celui-ci une commande d'un type particulier.

Ces périodes de non-alimentation concernent des durées en général beaucoup plus longues que celles utilisées dans des modes de commande par interruption d'une portion d'alternance de la tension alternative d'alimentation, voire même de quelques alternances comme décrit par exemple dans la demande FR 2 844 625.

Les durées de non-alimentation permettant d'envoyer une commande d'un type particulier sont de l'ordre de la seconde ou de plusieurs secondes.

Il est connu de la demande FR 2 761 183 d'utiliser une double coupure de l'alimentation de l'actionneur pour provoquer la remise à zéro de mémoires internes de l'actionneur et/ou pour placer celui-ci dans un mode d'apprentissage.

On connaît du brevet US 6,078,159 un dispositif de manoeuvre d'un élément de fermeture. Le dispositif comprend un boîtier de commande muni de deux touches permettant respectivement de commander les déplacements d'un élément mobile dans un premier sens et dans un deuxième sens. Pour placer ce dispositif dans un mode de configuration, il est nécessaire d'actionner au moins deux fois l'une ou l'autre des touches dans une plage temporelle prédéfinie et inférieure à une durée d'actionnement permettant la commande du mouvement de l'élément mobile. Ainsi, lorsqu'on veut commander le déplacement de l'élément mobile, il est nécessaire d'actionner la touche de commande pendant une durée supérieure à celle de la plage temporelle prédéfinie.

Dans les différents cas, il convient de s'assurer que les impulsions de commande se suivent dans un bref intervalle de temps. Or, du fait de la disparition de la tension du réseau alternatif au moment de la coupure, cette mesure n'est pas effectuée. Par exemple, le dispositif objet du brevet US 6,078,159 mesure la durée des impulsions de commande mais pas l'intervalle de temps qui les sépare.

Sans moyen permettant de mesurer le temps pendant lequel l'alimentation a été interrompue, il résulte une dégradation évidente de la sécurité. En effet, le microcontrôleur n'aura pas les moyens de distinguer une coupure brève volontaire, ayant une durée prédéterminée et répétée par exemple deux fois pour confirmation, d'une coupure accidentelle de très brève durée ou, au contraire, de très longue durée.

Le but de l'invention est de fournir un procédé permettant de remédier à ces inconvénients. En particulier, le procédé selon l'invention permet, par des moyens très simples d'estimer la durée pendant laquelle l'actionneur n'est pas alimenté.

Le procédé d'estimation selon l'invention est caractérisé par la partie caractérisante de la revendication 1.

Différents mode d'exécution du procédé selon l'invention sont définis par les revendications dépendantes 2 à 4.

L'actionneur selon l'invention est défini par la revendication 5.

L'actionneur peut comprendre une diode branchée en série avec l'élément de stockage d'énergie électrique entre les bornes de sortie du convertisseur de tension.

Le microcontrôleur peut comprendre une borne d'entrée reliée, d'une part, à un circuit de mesure de temps incluant l'horloge et la première mémoire et, d'autre part, à une borne de sortie du convertisseur de tension.

Les figures représentent, à titre d'exemples, des actionneurs selon l'invention qui permettent la mise en oeuvre du procédé selon l'invention.

La figure 1 est un schéma électrique d'un premier mode de réalisation d'un actionneur permettant de mettre en oeuvre le procédé selon l'invention.

La figure 2 est un schéma électrique d'un deuxième mode de réalisation d'un actionneur permettant de mettre en oeuvre le procédé selon l'invention.

La figure 3 est un ordinogramme décrivant les principales étapes d'un premier mode d'exécution du procédé selon l'invention.

La figure 4 est un ordinogramme décrivant les principales étapes d'un deuxième mode d'exécution du procédé selon l'invention.

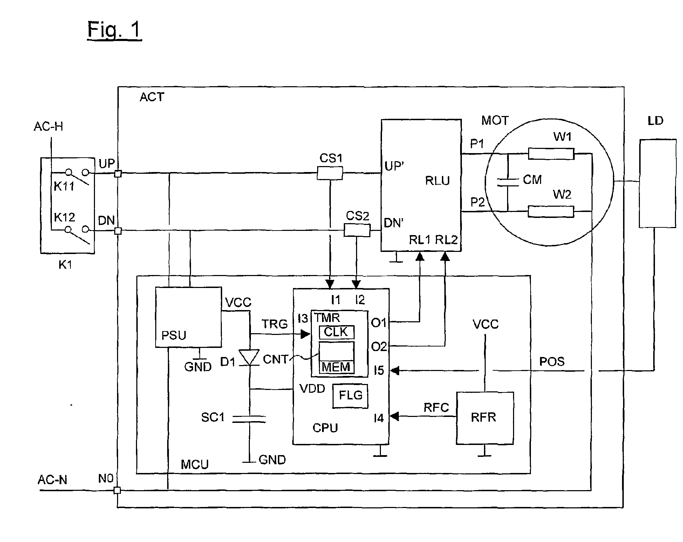

L'installation 1 représentée à la figure 1 comprend un actionneur ACT muni d'un moteur MOT entraînant un équipement mobile du bâtiment appelé charge LD dans un premier ou un deuxième sens de déplacement, par exemple dans un sens de montée ou de descente pour un volet roulant ou dans un sens horizontal à droite ou dans un sens horizontal à gauche pour un panneau coulissant. L'actionneur est raccordé au réseau de distribution électrique alternatif, qui comprend un conducteur neutre AC-N et un conducteur de phase AC-H. Ce raccordement est effectué au niveau du conducteur de neutre par une borne NO. Le raccordement au conducteur de phase est assuré par une première borne de phase UP et une seconde borne de phase DN, susceptibles d'être raccordées au conducteur de phase AC-H selon l'état d'un commutateur de commande K1. Sur la figure 1, le commutateur de commande comprend deux interrupteurs K11 et K12, par exemple des boutons poussoirs. Selon que l'utilisateur souhaite manoeuvrer l'équipement dans un sens ou dans l'autre, il appuie sur l'interrupteur K11 ou sur l'interrupteur K12. Les interrupteurs K11 et K12 sont nécessairement activés pendant toute la durée du mouvement, de manière à permettre l'alimentation de l'actionneur au travers de l'un ou l'autre de ces interrupteurs.

Les états « fermé » des interrupteurs K11 et K12 sont respectivement détectés par un premier capteur CS1 et un deuxième capteur CS2, constitués de dispositifs capteurs de courant, d'optocoupleurs ou de simples montages électroniques permettant la transformation d'une tension alternative élevée en tension continue de valeur suffisamment faible pour être exploitée de manière logique, par exemple 5 volts. Ces capteurs sont préférentiellement des capteurs de courant mais il peut tout aussi bien s'agir de diviseurs potentiométriques avec diode de redressement et condensateur de filtrage.

L'actionneur comprend une unité de commande MCU comprenant un microcontrôleur CPU et un convertisseur d'alimentation PSU.

Le convertisseur d'alimentation PSU permet de délivrer une tension continue entre deux lignes de sortie VCC et GND. Comme il est d'usage, le potentiel de la ligne de masse GND est référencé à 0 et celui de la ligne positive VCC vaut alors +Vcc, par exemple +5 volts. Ce potentiel continu est appliqué à différents circuits de l'unité de commande MCU pour les alimenter.

L'entrée du convertisseur d'alimentation PSU est susceptible d'être raccordée au conducteur de phase AC-H par l'intermédiaire de deux fils, qui sont reliés à la première borne de phase UP et à la seconde borne de phase DN.

Bien que situés en aval sur la figure 1, les capteurs CS1 et CS2 peuvent également se situer en amont des fils alimentant le convertisseur d'alimentation PSU, c'est-à-dire être intercalés entre les bornes UP ou DN et les fils d'alimentation du convertisseur d'alimentation PSU.

Les signaux issus des capteurs CS1 et CS2 sont appliqués à une première entrée I1 et à une deuxième entrée I2 du microcontrôleur CPU et déterminent, selon leur provenance, si l'ordre appliqué est un ordre de manoeuvre dans le premier sens ou dans le deuxième sens ou encore s'il résulte d'une combinaison d'appuis sur les interrupteurs K11 et K12 qui doit être interprétée comme un ordre particulier.

Dans le cas d'une installation communiquant à distance avec un émetteur d'ordres, les ordres peuvent être également reçus par un récepteur radio RFR et transmis au microcontrôleur par une ligne série RFC, appliquée à une quatrième entrée 14 du microcontrôleur CPU.

Le microcontrôleur CPU comprend une première sortie 01 et une deuxième sortie 02 raccordées à une unité de commutation RLU par une première entrée de commutation RL1 et une deuxième entrée de commutation RL2.

En fonction des ordres reçus, le microcontrôleur CPU active la première sortie 01 ou la deuxième sortie 02 de manière à actionner par exemple des relais contenus dans l'unité de commutation RLU. Les relais sont de type électromagnétique ou de type statique. L'unité de commutation permet le raccordement du moteur au conducteur de phase AC-H, au travers du commutateur K1 par l'intermédiaire de la première borne de phase UP ou de la deuxième borne de phase DN et au travers des capteurs CS1 ou CS2 qui entraînent une chute de tension négligeable. Ainsi, le potentiel du conducteur référencé UP' peut être assimilé au potentiel de la borne de phase UP, et le potentiel du conducteur référencé DN' peut être assimilé au potentiel de la borne de phase DN.

Dans le cas de la figure 1, le moteur MOT est un moteur à induction monophasé à condensateur de déphasage permanent, comportant deux bobinages W1 et W2 et un condensateur CM. Le moteur est relié d'une part au conducteur de neutre AC-N, par l'intermédiaire d'une connexion à la borne de neutre N0, et d'autre part au conducteur de phase AC-H, par l'intermédiaire de l'unité de commutation RLU dont les sorties P1 et P2 sont raccordées aux entrées UP', DN' selon l'état des entrées RL1 et RL2 de l'unité de commutation.

Un réducteur mécanique, non représenté, peut être intégré dans la chaîne cinématique entre le moteur électrique et l'équipement mobile à manoeuvrer.

Un capteur de position, non représenté peut être intégré à l'équipement mobile et délivrer un signal de position de celui-ci appliqué à une cinquième entrée I5 du microcontrôleur CPU, par une ligne POS.

Le microcontrôleur CPU comprend un circuit TMR de mesure de temps dont l'entrée de déclenchement TRG constitue une troisième entrée 13 du microcontrôleur. Cette entrée active aussi un programme d'interruption différent selon qu'elle bascule de l'état haut (1) à l'état bas (0) ou inversement. Le circuit TMR de mesure de temps comprend, comme représenté à la figure 1, une horloge CLK reliée à un compteur CNT. Ce compteur est incrémenté par les impulsions issues de l'horloge CLK. La sortie du compteur CNT est assimilée à une mémoire. En effet, entre deux impulsions d'horloge, la valeur de ce compteur reste inchangée. On désigne donc par mémoire MEM la partie du compteur CNT dans laquelle est stockée la valeur courante atteinte par le compteur.

Le microcontrôleur est alimenté entre une borne reliée à la masse GND et une borne d'alimentation VDD reliée à la ligne positive VCC à travers une diode D1. Un supercondensateur SC1 est disposé entre les bornes VDD et GND. Lorsque celui-ci a été chargé sous la tension +Vcc délivrée par le convertisseur PSU, il assure, pendant une durée limitée au moins supérieure à une durée maximum prédéterminée TMAX, l'alimentation du microcontrôleur au moins dans un mode de faible activité pendant lequel le circuit TMR de mesure de temps est opérationnel.

Si une coupure d'alimentation se prolonge sensiblement au-delà de cette durée, alors ce mode de faible activité ne peut plus être assuré et l'alimentation du microcontrôleur est interrompue. Cependant, le microcontrôleur comprend également au moins un emplacement de mémoire sauvegardée FLG qui permet de conserver au moins une information sur une très longue durée de non-alimentation. Cette mémoire FLG est par exemple constitué par une mémoire morte effaçable et programmable électriquement, ou simplement d'une mémoire à très faible consommation alimentée sous la tension résiduelle du supercondensateur SC1 ou par une pile indépendante, non représentée.

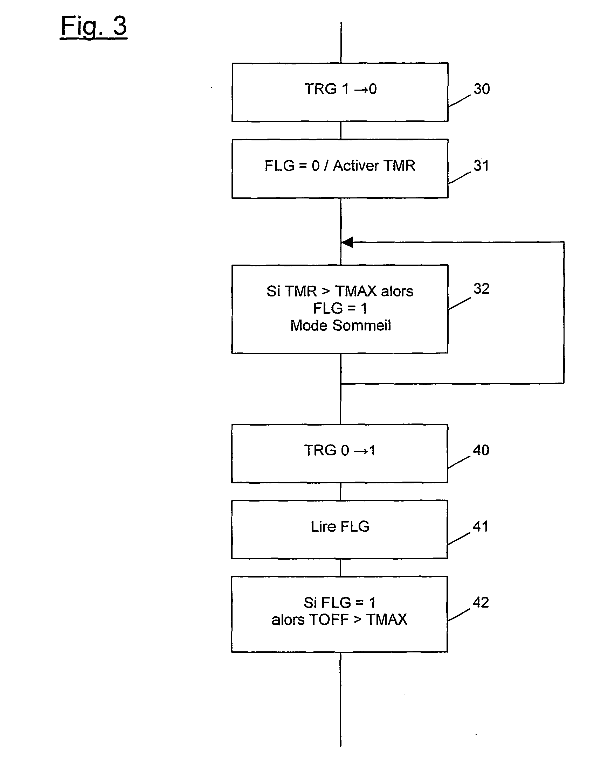

Un premier mode d'exécution du procédé selon l'invention est représenté par l'ordinogramme de la figure 3.

Dans une première étape d'activation 30, on détecte une transition de l'état haut (1) à l'état bas (0) de l'entrée de déclenchement TRG, cette transition étant le résultat d'une interruption de l'alimentation de l'actionneur.

Dans une deuxième étape 31, on initialise l'emplacement FLG de mémoire sauvegardé en lui affectant un état logique bas. On initialise également le compteur CNT (donc la mémoire MEM donnant la valeur du compteur CNT) et on active le circuit TMR de mesure du temps de manière à ce que le compteur CNT prenne en compte les impulsions de l'horloge CLK.

Dans une troisième étape 32, on teste en permanence la valeur indiquée par le compteur CNT du circuit TMR de mesure du temps. Dès que cette valeur est supérieure à une valeur prédéterminée TMAX, on affecte à l'emplacement FLG de mémoire sauvegardé un état logique haut et on bascule le microcontrôleur dans un mode sommeil dans lequel celui-ci ne consomme que l'énergie nécessaire à conserver les informations stockées dans ses mémoires.

Dans une quatrième étape 40, on détecte une transition de l'état bas (0) à l'état haut (1) de l'entrée de déclenchement TRG, cette transition étant le résultat d'une nouvelle connexion de l'actionneur à la source d'alimentation. Cette étape peut être constituée par le réveil du microcontrôleur CPU du fait de l'apparition d'une tension sur l'entrée VDD.

Dans une étape 41, on lit l'état de l'emplacement de mémoire sauvegardée FLG.

Dans une étape 42, on teste la valeur stockée dans l'emplacement de mémoire sauvegardée FLG. Si cette valeur correspond à un état haut, on affecte à la durée de coupure d'alimentation TOFF une valeur supérieure à la valeur de durée maximum prédéterminée TMAX.

Ainsi, on peut déterminer si la durée TOFF de coupure de l'alimentation de l'actionneur est supérieure à la durée prédéterminée TMAX. En fonction de ce résultat on peut, par exemple, prendre en compte l'interruption pour valider une commande particulière ou une portion de commande particulière.

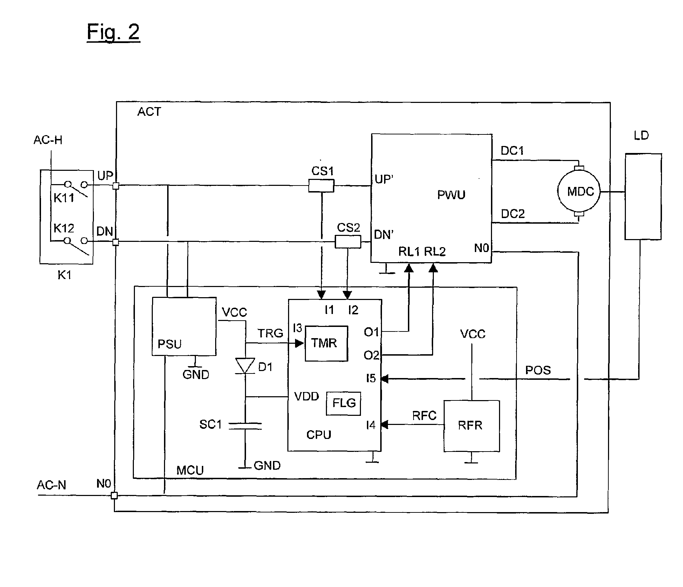

On peut également prévoir un deuxième emplacement FLG2 de mémoire sauvegardée dans lequel est enregistré un état haut dès que le circuit de mesure de temps TMR dépasse une valeur de durée minimum prédéterminée TMIN. La durée de coupure d'alimentation TOFF peut ainsi être encadrée entre deux valeurs. Il faut cependant remarquer que le microcontrôleur restant partiellement actif au moins pendant une durée TMAX, toute coupure d'alimentation de durée inférieure peut être traitée sans qu'il y ait sauvegarde d'information en mémoire sauvegardée.

Dans un deuxième mode d'exécution du procédé selon l'invention, on n'utilise pas d'emplacement de mémoire sauvegardée.

En effet, on dimensionne, lors de la conception de l'unité de commande MCU, le supercondensateur SC1 de manière à ce que celui-ci ne puisse alimenter le microcontrôleur que pendant une durée légèrement supérieure à la somme de la durée maximum prédéterminée TMAX et du temps nécessaire au traitement de l'information sur la mesure du TOFF. Dans ces conditions, le rétablissement de la tension d'alimentation avant le délai TMAX provoque la simple poursuite du programme : par exemple, un cycle de mesure du temps d'alimentation est activé.

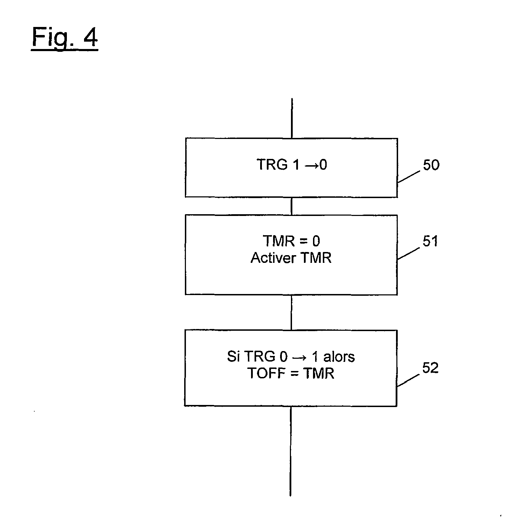

Ainsi, comme représenté à la figure 4, dans une première étape d'activation 50, on détecte une transition de l'état haut (1) à l'état bas (0) de l'entrée de déclenchement TRG, cette transition étant le résultat d'une interruption de l'alimentation de l'actionneur.

Dans une deuxième étape 51, on initialise le compteur CNT (donc la mémoire MEM donnant la valeur du compteur CNT) et on active le circuit TMR de mesure du temps de manière à ce que le compteur CNT prenne en compte les impulsions de l'horloge CLK.

Dans une étape 52, lorsqu'on détecte une transition de l'état bas (0) à l'état haut (1) de l'entrée de déclenchement TRG, résultant d'une nouvelle connexion de l'actionneur à la source d'alimentation, on lit le contenu du circuit TMR de mesure de temps. Si le contenu du circuit TMR est une valeur particulière de réinitialisation, on en déduit que le circuit a été réinitialisé entre l'étape 51 et l'étape 52 du fait d'une interruption de l'alimentation du microcontrôleur et que l'interruption d'alimentation de l'actionneur a été plus longue que la durée prédéterminée TMAX. Dans le cas contraire, la valeur lue correspond à la durée TOFF d'interruption de l'alimentation de l'actionneur.

Ce deuxième mode d'exécution du procédé est susceptible de variantes. Par exemple, on peut enregistrer dans le circuit de mesure de temps la valeur TMAX et décrémenter cette valeur jusqu'à zéro.

L'installation 1', représentée à la figure 2, diffère de l'installation précédemment décrite en ce que le moteur MDC de l'actionneur est du type à courant continu.

Cette différence oblige à remplacer l'unité de commutation par une unité de puissance PWU assurant le redressement de la tension alternative du réseau alternatif et le branchement du moteur MDC selon une première polarité ou une deuxième polarité pour manoeuvrer l'équipement dans un premier sens ou dans un deuxième sens. La structure détaillée d'une telle unité de puissance PWU est connue de l'homme du métier.

## Revendications

1. Procédé d'estimation d'une durée pendant laquelle un actionneur (ACT) destiné à manoeuvrer un écran mobile ou un équipement (LD) mobile de fermeture, d'occultation ou de protection solaire d'un bâtiment n'est pas alimenté, l'actionneur (ACT) comprenant
- au moins deux bornes (UP, DN, N0) pour relier l'actionneur à une source de tension (AC-H, AC-N),
- un moteur électrique (MOT ; MDC),
- une unité de commande (MCU) reliée à des moyens (RLU ; PWU) d'alimentation du moteur à partir de la source de tension (AC-H, AC-N) et comprenant
- un convertisseur de tension (PSU) dont la sortie alimente un microcontrôleur (CPU) pilotant les moyens (RLU ; PWU) d'alimentation du moteur (MOT; MDC) et comprenant une horloge (CLK) et au moins une prmière mémoire (MEM) et,
- un élément (SC1) de stockage d'énergie électrique chargé par le convertisseur de tension (PSU) et branché entre les bornes d'alimentation du microcontrôleur (CPU),
**caractérisé en ce qu'**il comprend les étapes suivantes :
- charger l'élément de stockage d'énergie (SC1),
- cesser d'alimenter l'actionneur (ACT),
- alimenter le microcontrôleur (CPU) grâce à l'énergie de l'élément de stockage (SC1), initialiser la ou les mémoires (MEM ; FLG) puis modifier le contenu de la première mémoire (MEM) grâce à l'horloge (CLK),
- si le microcontrôleur est alimenté par l'élément de stockage (SC1) pendant une durée supérieure à une durée prédéterminée (TMAX), stocker une valeur particulière dans la première mémoire (MEM) ou dans l'une des mémoires (MEM, FLG),
- alimenter l'actionneur (ACT),
- lire la valeur stockée dans la mémoire (MEM ; FLG),
- déduire de cette valeur si la durée séparant l'événement de la deuxième étape de l'événement de la cinquième étape est supérieure ou inférieure à la valeur de durée prédéterminée (TMAX).

2. Procédé selon la revendication 1, **caractérisé en ce que** l'étape de stockage d'une valeur particulière dans la première mémoire (MEM) est déclenchée par l'apparition de la valeur maximum prédéterminée (TMAX) dans la mémoire (MEM).

3. Procédé selon la revendication 1, **caractérisé en ce que** l'étape de stockage d'une valeur particulière dans la mémoire (FLG) est déclenchée par une interruption de l'alimentation microcontrôleur (CPU).

4. Procédé selon la revendication 1 ou 2, **caractérisé en ce qu'**il comprend, avant l'étape d'alimentation de l'actionneur, une étape de désactivation du microcontrôleur (CPU) et **en ce qu'**il comprend, après l'étape d'alimentation de l'actionneur, une étape d'activation du microcontrôleur (CPU).

5. Actionneur (ACT) destiné à manoeuvrer un écran mobile ou un équipement (LD) mobile de fermeture, d'occultation ou de protection solaire d'un bâtiment, l'actionneur (ACT) comprenant
- au moins deux bornes (UP, DN, N0) pour relier l'actionneur à une source de tension (AC-H, AC-N),
- un moteur électrique (MOT ; MDC),
- une unité de commande (MCU) reliée à des moyens (RLU ; PWU) d'alimentation du moteur à partir de la source de tension (AC-H, AC-N) et comprenant
- un convertisseur de tension (PSU) dont la sortie alimente un microcontrôleur (CPU) pilotant les moyens (RLU ; PWU) d'alimentation du moteur (MOT; MDC) et comprenant une horloge (CLK) et au moins une mémoire (MEM ; FLG),
- un élément (SC1) de stockage d'énergie électrique chargé par le convertisseur de tension (PSU) et branché entre les bornes d'alimentation du microcontrôleur (CPU),
**caractérisé en ce qu'**il comprend des moyens logiciels pour la mise en oeuvre du procédé selon l'une des revendications précédentes.

6. Actionneur (ACT) selon la revendication 5, **caractérisé en ce qu'**il comprend une diode (D1) branchée en série avec l'élément (SC1) de stockage d'énergie électrique entre les bornes (VCC, GND) de sortie du convertisseur de tension (PSU).

7. Actionneur (ACT) selon la revendication 5 ou 6, **caractérisé en ce que** le microcontrôleur (CPU) comprend une borne d'entrée (13) reliée, d'une part, à un circuit de mesure de temps (TMR) incluant l'horloge (CLK) et la première mémoire (MEM) et, d'autre part, à une borne de sortie (VCC) du convertisseur de tension (PSU).

## Claims

1. Method of estimating a time for which an actuator (ACT) intended to operate a moving screen or a moving closure, blackout or solar protection device (LD) of a building is not powered, the actuator (ACT) comprising
- at least two terminals (UP, DN, N0) for connecting the actuator to a voltage source (AC-H, AC-N),
- an electric motor (MOT; MDC),
- a control unit (MCU) connected to means (RLU; PWU) of supplying power to the motor from the voltage source (AC-H, AC-N) and comprising
- a voltage converter (PSU), the output of which supplies power to a microcontroller (CPU) driving the means (RLU; PWU) of supplying power to the motor (MOT; MDC) and comprising a clock (CLK) and at least one first memory (MEM), and
- an electrical energy storage element (SC1) charged by the voltage converter (PSU) and connected between the power supply terminals of the microcontroller (CPU),
**characterized in that** it comprises the following steps:
- charging the energy storage element (SC1),
- ceasing to supply power to the actuator (ACT),
- supplying power to the microcontroller (CPU) using the energy from the storage element (SC1), initializing the memory or memories (MEM; FLG) then modifying the content of the first memory (MEM) using the clock (CLK),
- if the microcontroller is supplied by the storage element (SC1) for a time greater than a predetermined time (TMAX), storing a particular value in the first memory (MEM) or in one of the memories (MEM, FLG),
- supplying power to the actuator (ACT),
- reading the value stored in the memory (MEM; FLG),
- deducing from this value whether the time between the event of the second step and the event of the fifth step is greater than or less than the predetermined time value (TMAX).

2. Method according to Claim 1, **characterized in that** the step for storing a particular value in the first memory (MEM) is triggered by the appearance of the predetermined maximum value (TMAX) in the memory (MEM).

3. Method according to Claim 1, **characterized in that** the step for storing a particular value in the memory (FLG) is triggered by an interruption of the microcontroller (CPU) power supply.

4. Method according to Claim 1 or 2, **characterized in that** it comprises, before the actuator power supply step, a step for deactivating the microcontroller (CPU), and **in that** it comprises, after the actuator power supply step, a step for activating the microcontroller (CPU).

5. Actuator (ACT) intended to operate a moving screen or a moving closure, blackout or solar protection device (LD) of a building, the actuator (ACT) comprising
- at least two terminals (UP, DN, N0) for connecting the actuator to a voltage source (ACH-H, AC-N),
- an electric motor (MOT; MDC),
- a control unit (MCU) connected to means (RLU; PWU) of supplying power to the motor from the voltage source (AC-H, AC-N) and comprising
- a voltage converter (PSU), the output of which supplies power to a microcontroller (CPU) driving the means (RLU; PWU) of supplying power to the motor (MOT; MDC) and comprising a clock (CLK) and at least one memory (MEM; FLG),
- an electrical energy storage element (SC1) charged by the voltage converter (PSU) and connected between the power supply terminals of the microcontroller (CPU),
**characterized in that** it comprises software means for implementing the method according to one of the preceding claims.

6. Actuator (ACT) according to Claim 5, **characterized in that** it comprises a diode (D1) connected in series with the electrical energy storage element (SC1) between the output terminals (VCC, GND) of the voltage converter (PSU).

7. Actuator (ACT) according to Claim 5 or 6, **characterized in that** the microcontroller (CPU) comprises an input terminal (13) connected, on the one hand, to a time measuring circuit (TMR) including the clock (CLK) and the first memory (MEM) and, on the other hand, to an output terminal (VCC) of the voltage converter (PSU).

## Patentansprüche

1. Verfahren zum Schätzen einer Dauer, während der ein Betätigungsgerät (AST), das zum Betätigen einer beweglichen Abschirmung oder einer beweglichen Schliess-, Verdunkelungs- oder Sonnenschutzeinrichtung (LD) eines Gebäudes bestimmt ist, nicht gespeist wird, wobei das Betätigungsgerät (AST) folgendes aufweist:
- wenigstens zwei Klemmen (UP, DN, NO) zum Anschluss des Betätigungsgeräts an eine Spannungsquelle (AC-H, AC-N),
- einen Elektromotor (MOT; MDC),
- eine Steuereinheit (MCU), die mit Mitteln (RLU; PWU) zum Speisen des Motors aus der Spannungsquelle (AC-H, AC-N) verbunden ist und folgendes umfasst:
- einen Spannungsumformer (PSU), dessen Ausgang eine Mikrokontrolleinheit (CPU) speist, welche die Mittel (RLU; PWU) zum Speisen des Motors (MOT; MDC) steuert und einen Zeitgeber (CLK) sowie wenigsens einen ersten Speicher (MEM) hat, und
- ein Element (SC1) zum Speichern elektrischer Energie, das vom Spannungsumformer (PSU) geladen wird und zwischen die Speiseklemmen der Mikrokontrolleinheit (CPU) geschaltet ist,
**dadurch gekennzeichnet, dass** es die folgenden Schritte umfasst:
- Laden des Energiespeicherelements (SC1),
- Beenden der Speisung des Betätigungsgeräts (ACT),
- Speisen der Mikrokontrolleinheit (CPU) dank der Energie des Speicherelements (SC1), Initialisieren des oder der Speicher (MEM, FLG), dann Modifizieren des Inhalts des ersten Speichers (MEM) dank des Zeitgebers (CLK),
- wenn die Mikrokontrolleinheit durch das Speicherelement (SC1) während einer Dauer gespeist wird, die länger ist als eine vorbestimmte Dauer (TMAX), Speichern eines besonderen Werts im ersten Speicher (MEM) oder in einem der Speicher (MEM, FLG),
- Speisen des Betätigungsgeräts (ACT),
- Lesen des im Speicher (MEM, FLG) gespeicherten Werts,
- aus diesem Wert ableiten, ob die Dauer, die das Ereignis des zweiten Schritts vom Ereignis des fünften Schritts trennt, grösser oder kleiner als der Wert der vorbestimmten Dauer (TMAX) ist.

2. Verfahren nach Anspruch 1, **dadurch gekennzeichnet, dass** der Schritt, bei dem ein besonderer Wert im ersten Speicher (MEM) gespeichert wird, durch das Auftreten des vorbestimmten Maximalwerts (TMAX) im Speicher (MEM) ausgelöst wird.

3. Verfahren nach Anspruch 1, **dadurch gekennzeichnet, dass** der Schritt, bei dem ein besonderer Wert im Speicher (FLG) gespeichert wird, durch eine Unterbrechung der Speisung der Mikrokontrolleinheit (CPU) ausgelöst wird.

4. Verfahren nach Anspruch 1 oder 2, **dadurch gekennzeichnet, dass** es vor dem Schritt, bei dem das Betätigungsgerät gespeist wird, einen Schritt des Desaktivierens der Mikrokontrolleinheit (CPU) umfasst und dass es nach dem Schritt, bei dem das Betätigungsgerät gespeist wird, einen Schritt des Aktivierens der Mikrokontrolleinheit (CPU) umfasst.

5. Betätigungsgerät (ACT) zum Betätigen einer beweglichen Abschirmung oder einer beweglichen Schliess-, Verdunkelungs- oder Sonnenschutzeinrichtung (LD) eines Gebäudes, wobei dieses Betätigungsgerät (ACT) folgendes aufweist:
- wenigstens zwei Klemmen (UP, DN, NO) zum Anschluss an eine Spannungsquelle (AC-H. AC-N),
- einen Elektromotor (MOT; MDC),
- eine Steuereinheit (MCU), die mit Mitteln (RLU; PWU) zum Speisen des Motors aus der Spannungsquelle (AC-H, AV-N) verbunden ist,
- einen Spannungsumformer (PSU), dessen Ausgang eine Mikrokontrolleinheit (CPU) speist, welche die Mittel (RLU; PWU) zum Speisen des Motors (MOT; MDC) steuert und einen Zeitgeber (CLK) sowie wenigstens einen Speicher (MEM; FLG) aufweist,
- ein Element (SC1) zum Speichern elektrischer Energie, welches vom Spannungsumformer (PSU) geladen wird und zwischen die Speiseklemmen der Mikrokontrolleinheit (CPU) geschaltet ist,
**dadurch gekennzeichnet, dass** es Software-Mittel zum Durchführen des Verfahrend nach einem der vorangehenden Ansprüche aufweist.

6. Betätigungsgerät (ACT) nach Anspruch 5, **dadurch gekennzeichnet, dass** es eine Diode (D1) aufweist, die in Reihe mit dem Element (SC1) zum Speichern elektrischer Energie zwischen die Klemmen (VCC, GND) des Ausgangs des Spannungsumformers (PSU) geschaltet ist.

7. Betätigungsgerät (ACT) nach Anspruch 5 oder 6, **dadurch gekennzeichnet, dass** die Mikrokontrolleinheit (CPU) eine Eingangsklemme (13) hat, die einerseits an eine den Zeitgeber (CLK) und den ersten Speicher (MEM) einschliessende Zeitmessschaltung (TMR) und andererseits an eine Ausgangsklemme (VCC) des Spannungsumformers (PSU) angeschlossen ist.
